Europäisches Patentamt

European Patent Office

Office européen des brevets

(11) Publication number: **0 028 158**
A1

(12) **EUROPEAN PATENT APPLICATION**

(21) Application number: 80303832.2

(22) Date of filing: 28.10.80

(51) Int. Cl.³: **C 01 G 9/06,** C 22 B 3/00, C 25 C 1/00

(30) Priority: 29.10.79 GB 7937393

(43) Date of publication of application: 06.05.81 Bulletin 81/18

(84) Designated Contracting States: **AT BE CH DE FR GB IT LI LU NL SE**

(71) Applicant: **DIAMOND SHAMROCK CORPORATION, 1100 Superior Avenue, Cleveland Ohio 44114 (US)**

(72) Inventor: **Vance, Christopher John, 6 Chemin de la Montagne, CH-1224 Chene-Bougeries Geneva (CH)**

(74) Representative: **Oliver, Roy Edward et al, POLLAK, MERCER & TENCH High Holborn House 52-54 High Holborn, London WC1V 6RY (GB)**

(54) Methods and systems of removal of metals from solution and of purification of metals and purified solutions and metals so obtained.

(57) Trace metals such as copper and cadmium are removed from a solution such as a zinc sulphate electrolyte by electrolysis using a particulate bed cathode or a reticulate cathode. Electrolysis is carried out to deposit a relatively electronegative metal which is then used to cement out a less electronegative metal from solution. Usually, the more electronegative metal is a contaminant of a co-deposited less electronegative metal and in this case the cementation stage serves to purify the deposit of less-electronegative metal by dissolution of the more-electronegative metal with a simultaneous further reduction of the concentration of the less electronegative metal in solution.

EP 0 028 158 A1

METHODS AND SYSTEMS OF REMOVAL OF METALS FROM SOLUTION AND OF
PURIFICATION OF METALS AND PURIFIED SOLUTIONS AND METALS SO OBTAINED.

## Technical Field

The invention relates to the removal of metals from solution,
including instances where more than one metal is removed so as to purify
the solution and/or where it may be desired to recover one or more of
the removed metals in a pure or relatively pure state.

More specifically, but not exclusively, the invention relates to
the removal of traces of metals such as copper and cadmium from a
solution such as a zinc electrolyte to purify the solution and to obtain
the metals as useful products in a relatively pure state.

## Background Art

In the electrolytic production of zinc, the efficiency of the
electrolysis and the purity of the zinc product are reduced if impurities
are present in the electrolyte. Usually, the electrolyte is an aqueous
zinc sulphate solution obtained by leaching roasted zinc ore with spent
electrolyte and subsequent purification to remove traces of copper,
cadmium and various other impurities. The established commercial practice

0028158

for the removal of traces of copper and cadmium present in the solution is to employ zinc dust to cement out a cake of copper and/or cadmium, i.e. by substitution and reduction utilizing the differences between the electrochemical potentials of zinc and the less electronegative cadmium and copper. This conventional cementation process is disadvantageous because the production of the zinc dust is complicated, and it involves zinc losses in addition to which the recovered copper and/or cadmium cake requires separate purification. A partial remedy proposed in US Patent No. 4 078 040 is the use of an agitated fluidized bed of the zinc dust to simplify separation of the copper/cadmium cake and to reduce losses of the zinc dust.

Another approach is to purify the zinc sulphate electrolyte using a series of electrochemical cells having particulate bed cathodes either as a random fluidized bed or as a recirculating bed onto which the copper and cadmium impurities are electrodeposited. This approach is very promising and substantial advantages over the zinc dust cementation process have been claimed (see pages 12-14 of the paper entitled "Fluidized bed electrolysis for the removal or recovery of metals from dilute solutions" presented by Raats et al at the International Symposium "Chloride Hydrometallurgy", Brussels, September 26-28, 1977), but it is not without drawbacks. In the first stages of the process, copper is preferentially deposited and, starting from small copper seed particles, large particles of pure copper are recovered. However, as the concentration of copper ions drops below a given value depending on the process parameters, cadmium also begins to deposit and, until all of the copper is removed, copper/cadmium deposits are produced on copper or cadmium seed particles and, if very pure metals are required, further refining is necessary. Pure cadmium deposits can then be obtained, but again as soon as the concentration of cadmium ions drops below a given value depending on the process parameters, zinc also deposits on the particles, thereby reducing the current efficiency of the purification process. Also, to obtain pure cadmium, subsequent purification is necessary. Furthermore, to achieve adequate purification from impurity concentrations of several hundred ppm down to as low as 0.1 ppm, many particulate cathode bed electrolysis cells are needed to treat the electrolyte of any sizeable zinc electrowinning factory. Capital savings are possible compared to the cementation process, but it is still desirable to reduce the number of electrolysis cells, improve their metal recovery efficiencies (i.e. generally reduce power consumption) and improve the purity of the recovered copper and cadmium.

### Disclosure of the Invention

The invention, as set out in the accompanying claims, has three main aspects: the purification of a solution by the removal of metal ions from the solution; the purification of the metal removed from the solution; and, generally, the removal of metals from solution. The invention is particularly concerned with the removal of metals from solution using an electrochemical cell having a particulate bed cathode, a reticulate cathode or a similar cathode offering a high surface area per unit volume. The invention is very advantageous when particulate bed cathodes are used and will be explained in further detail with this as an example. However, it is understood that the principles of the invention as explained herein with reference to the growth of particles in a particulate bed cathode also apply to cathodic deposits of metal on other types of cathode, notably reticulate cathodes.

The invention makes use of the well known fact that when metal particles are electrochemically grown as a particulate bed cathode, if the current is switched off the particles cease to be cathodically protected and the electrodeposited material will slowly dissolve. For obvious reasons, it has heretofore been considered essential to always avoid current stoppages, since this will involve a loss of the electrodeposited product, re-contamination of the electrolyte and energy wastage. However, according to the invention, when the conditions are such that the electrogrown particles contain a quantity of a relatively electronegative metal (usually as a contaminant of a less electronegative metal being removed from the solution) and these electrogrown particles are in a solution containing a less electronegative metal, in the absence of cathodic protection of the particles these particles will not simply dissolve away but there will be a selective dissolution of the relatively electronegative metal in the particles and a cementation of the less electronegative metal from the solution onto the particles.

One aspect of the invention concerns a method of purifying a solution containing ions of a first metal to be removed and at least one more electronegative metal. For example, the solution may be a zinc sulphate electrolyte contaminated with copper and cadmium, in which case copper

is the "first" metal to be removed and cadmium is the more electronegative metal and, after removal of the copper, cadmium becomes the
"first" metal to be removed and zinc the more electronegative metal.

A first step of the method consists of cathodically depositing metal
in an electrochemical cell having for example a particulate bed cathode.
The particulate cathode will usually consist of seed particles of the
first metal (i.e. copper or cadmium, as the case may be) maintained as a
circulating or fluidized bed in a catholyte which either is the solution
to be purified, or has a similar composition to the solution to be
purified by the method according to the invention.  Current is supplied
to deposit the first metal (copper or cadmium) onto the particles, so
that the concentration of first metal in the catholyte depletes until the
more electronegative metal also begins to deposit, i.e. until cadmium
begins to deposit on the copper or zinc begins to deposit on the cadmium.
This first stage of the method is thus basically a conventional puri-
fication/electrowinning operation using for example a particulate bed
cathode.  However, according to the invention, the supply of current is
continued until a certain amount of the more electronegative metal is
deposited, this amount depending on the desired amount of depletion of
the first metal from the solution to be purified in a subsequent
cementation step.

Then, without supplying electric current, the electrogrown particles
are maintained as a bed in the solution to be purified to allow exchange
of a quantity of the more electronegative metal contained in or on the particles with a corresponding quantity of first metal in the solution by dissolution of the more electronegative metal (cadmium or zinc) and cementation of the first metal (copper or cadmium) onto the particles. Hence, the solution is purified down to a given concentration of the first metal ions by cementation using the electrogrown particles.

The cementation with a bed of electrogrown particles in the method of the invention is different to conventional cementation e.g. using zinc powder to cement copper/cadmium. The differences are apparent by a comparison with the fluidized bed cementation of US Patent No. 4 078 040 in which copper/cadmium cakes onto the surfaces of the zinc granules and the bed turbulence is arranged to separate the copper/cadmium cake from the zinc granules which will continue to dissolve. In the method of the invention, the electrogrown particles or granules will usually consist predominantly or at least have their core consisting predominantly of the metal to be removed from the solution e.g. copper or cadmium, and only the remainder of the particles or granules, usually predominantly the outer surface, will contain the more electronegative metal, e.g. cadmium or zinc. During cementation the cemented metal will tend to purify the particles or granules and it is therefore desirable to form an adherent deposit by cementation. Hence, a pronounced agitation of the bed is not required as in the method of US Patent 4 078 040, but a relatively non-turbulent circulation of the bed has been found quite sufficient to give adequate cementation even in dilute solutions of the metal ions to be cemented. Apparently, the large specific surface area and high mass transfer rates obtained in a circulating bed favour rapid and effective cementation. Moreover, the freshly electrodeposited more electronegative metal (cadmium or zinc) seems to be in a more reactive form than granules of the same metal prepared by the conventional methods e.g. milling electrodeposited zinc to form a dust.

Therefore, the cementation step of the method according to the invention may be carried out in the cell in which the deposit such as particles was electrochemically grown, with the electrogrown particles maintained preferably as a circulating bed and with the current switched off (i.e. open circuit) or with the electrodes short-circuited. Alternatively, the electrogrown deposit such as particles may be transferred from the electrochemical cell in which it was grown, to a separate cementation unit which could be another electrochemical cell in which cementation is carried out, or to a "cementation-only" unit. In either case, during cementation the cathodically-grown deposit for example a bed of electrogrown particles can be maintained in the depleted electrolyte in which the particles were grown until the concentration of ions of the first metal (cadmium or copper) has been further depleted by cementation down to a given value.

Alternatively, during cementation the cathodically-grown deposit such as a bed of electrogrown particles can be maintained in a solution to be purified which initially has a higher concentration of ions of the first metal than the depleted electrolyte at the end of electrochemical growth of the deposit. For example, the solution purified by cementation with the electrogrown particles can be further purified by supplying it as the electrolyte solution to the electrochemical cell in which the particles used for the cementation step are grown.

Another alternative is that during cementation the cathodically-grown deposit such as a bed of particles is maintained in a solution to be purified which initially has a lower concentration of ions of the first metal than the depleted electrolyte at the end of electrochemical growth of the deposit. For example, at the end of the electrochemical growth of the particles used for cementation, purification of the depleted electrolyte is continued by passing it through at least one further electrochemical cell having a particulate bed cathode, and then passing it through the bed of previously grown particles for further purification by cementation. This is particularly advantageous to reduce the concentration of the first metal e.g. cadmium down to very low levels at which the current efficiency for deposition of the metal is quite low. By using this arrangement, the number of electrochemical cells needed for the last stages of purification of the liquid can be reduced, and appreciable energy savings made.

At the end of cementation, the cathodically-grown deposit such as electrogrown particles may consist of substantially pure first metal (copper or cadmium), i.e. when substantially all of the more electronegative metal in the electrogrown particles is disposed adjacent the particle surface and is available for cementation, and this amount of the more electronegative metal is sufficient to cement out the desired quantity of the first metal in the solution to bring the concentration down to the requisite value.

However, cementation may be terminated when the concentration of ions of the first metal in the solution has dropped to a given level whereas the particles or other deposit still contain an appreciable amount of the more electronegative metal. In this case, after the cementation, the particles may be used for further cementation in another solution e.g. to purify the other solution and simultaneously further purify the particles.

Another main aspect of the invention is the method of purifying the electrogrown deposit such as particles. To a certain extent, some purification of the particles or other deposit will take place in carrying out the method of purifying the solution and, as is apparent from the above description, when the process conditions are appropriate the two purification methods can be carried out simultaneously.

When applying the invention primarily to purify the metal, for example as electrogrown particles, the electric current is supplied to grow the particles until the amount of the more electronegative metal (cadmium or zinc) electrodeposited on the particles reaches a selected value of contamination of the first metal (copper or cadmium) in the particles. Then, the electrogrown particles are maintained as a bed in the depleted electrolyte solution or in a similar solution containing ions of the first metal without supplying electric current until substantially all of the more electronegative metal contained in the particles is exchanged with ions of the first metal in the solution by dissolution of the more negative metal and cementation of the first metal onto the particles.

The particles or other deposit can be purified in this way in a single cementation step, or part of the more electronegative metal contained in the particles is removed in a first cementation step, and the remainder of the more electronegative metal contained in the particles is removed in a second cementation step.

Generally speaking, purification of the particles or other deposit may be carried out as described for the method of purifying the solution. The basic difference is that when the solution is to be purified the electrogrown deposit must contain enough of the more electronegative metal to produce the desired depletion of the solution by cementation, and when the deposit is to be purified the solution must contain a sufficient concentration of the first metal to remove all or most of the more electronegative metal in the particles or other deposits to bring them to the desired purity.

Another aspect of the invention concerns a method of removing a metal from solution by cementation with particles of a more electronegative metal, such a method being characterized by using electrogrown particles containing the more electronegative metal. Preferably, the electrogrown particles also contain the metal to be removed, i.e. the particles will usually have a core consisting predominantly of the metal to be removed and an electrodeposited surface layer containing the more electronegative metal.

The invention also broadly concerns a method of removing one or more metals from solution, by electrodepositing at least one metal which is more electronegative than said metal(s) to be removed onto a particulate, reticulate or other cathode of an electrochemical cell, and maintaining the electrodeposited metal in a non-cathodically-protected state in said solution to remove said metal(s) by cementation and dissolution of the more electronegative metal(s). Hence, the principles of the invention as explained above in connection with particulate bed cathodes can also be employed to advantage with electrolysis cells having other types of cathode, notably reticulate cathodes offering a high surface area.

Thus, although it has not previously been considered economic to remove traces of some metals such as cobalt and nickel from solution by electrolysis because of the low current efficiency due to the competing hydrogen evolution reaction, this can now be indirectly achieved according to the invention by electrodepositing a more electronegative metal such as zinc onto a particulate or reticulate cathode and employing the electrodeposited metal to cement out the trace metals.

In most instances, the more electronegative metal will already be present in the solution to be treated, as is the case with a zinc electrolyte where zinc is the desired main constituent. However, the invention also applies to the removal of metals from a solution which initially does not contain the more electronegative metal, and where the more electronegative metal is deliberately added prior to electrochemical growth of e.g. particles, or where the more electronegative metal passes into solution during cementation. After cementation, the more electronegative metal can then be removed from the solution if desired, e.g. by a subsequent electrowinning operation.

When cementation is carried out in an electrochemical cell with the electrodes short-circuited, a relatively small current may be generated due to the potential difference between the electrodes. This can be beneficial for dissolution of the more electronegative metal but if the less electronegative or "first" metal also tends to dissolve, then cementation should be carried out under open circuit conditions.

The methods of the invention can be employed with existing installations of electrochemical cells used for the removal or recovery of metals from dilute solutions. The advantages available here will be power savings, lower energy consumption, purification of the solution to lower levels than was possible before and/or more pure metal recovered at no extra cost.

With new installations, use of the methods according to the invention offers the further possibility of reducing the required number of electrochemical cells and hence a reduction of the capital cost. Furthermore, in appropriate cases, the electrochemical cells may be combined with existing equipment for carrying out the cementation step using electrogrown particles, hence enabling further capital savings.

The invention therefore also pertains to a system for carrying out the above methods, comprising at least one electrochemical cell having a cathode chamber for receiving the particulate bed cathode in a stream of electrolyte to be purified and means for removing electrogrown particles from the cathode chamber, and at least one cementation unit having a cementation chamber for receiving a bed of electrogrown particles in a stream of solution to be purified, the or each cementation chamber being connected to the means for removing electrogrown particles from a cathode chamber to receive electrogrown particles therefrom.

## Brief description of drawings

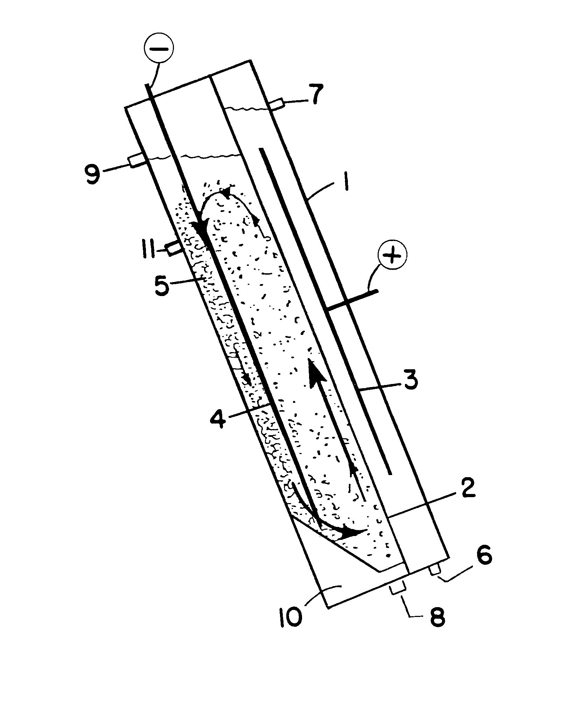

The single figure of the drawings is a schematic representation of a preferred type of electrochemical cell for carrying out the method according to the invention.

## Best modes for carrying out the invention

The cell shown comprises a generally rectangular housing 1 divided by an ion-permeable membrane 2 into an anode compartment containing an anode 3 and a cathode compartment containing cathode current feeder rods 4 and a particulate cathode 5. The anode compartment has an anolyte inlet 6 and outlet 7 and the cathode compartment a catholyte inlet 8 and outlet 9, as well as an outlet 11 for removing electrogrown particles of the cathode 5 from the compartment. Adjacent the catholyte inlet 8 is a generally wedge-shaped piece 10 incorporating a flow distributor arranged so that in use the flow of catholyte entrains the particulate cathode 5 as a circulating bed. The cell housing 1 is tilted to favour upward flow of the particulate bed cathode 5 adjacent the membrane 2 and downward flow adjacent the current feeder rods 4, as indicated by the arrows.

For the practice of the method according to the invention, this circulating bed cathode arrangement is preferred to a random or turbulent fluidized bed, because with a circulating bed the particles can be grown with a     higher growth ratio while deposition on the cathode current feeder(s) is insignificant and problems of clogging the membrane or diaphragm are reduced. However, random, turbulent fluidized beds can also be used as cathode during growth of the particles and during cementation. When growth of the particles and cementation are carried out in different units, the growth will preferably be in a circulating bed electrolysis cell, as shown, and cementation can take place in a random, fluidized bed in a cementation unit without a current feeder and membrane or diaphragm.

The invention will be further illustrated in the following examples.

## Example 1

The feasibility and advantages of the method of the invention are demonstrated by the following non-optimized test runs using a cell as schematically illustrated, having cathode current feeder rods 4 made of copper, an anode 3 consisting of titanium mesh coated with an electro- catalytic mixed-oxide coating available under the trademark "DSA", and an ion-exchange membrane 2 available from IONAC Inc. The anolyte was aqueous 50 g/l sulphuric acid. The particulate cathode was composed of cadmium particles and the catholyte was commercial zinc sulphate from which copper had been removed down to $<$ 1 ppm. The solution contained 128 g/l of zinc (as metal) and 314 ppm cadmium with traces of the other impurities normally present in such solutions.

The catholyte was circulated with a steady flow rate sufficient to maintain the bed with a substantially uniform circulation, at pH 2.65 - 2.75 and an average temperature of 58°C. Current was supplied corresponding to a current density of 1kA/m$^2$ per geometrical area of the anode. To measure the bed potential, the current was momentarily interrupted after 35 and 55 minutes. The current was switched off after 80 minutes and circulation of the zinc sulphate solution was continued at the same flow rate for a further 105 minutes, to maintain the circulating bed without the supply of current. Table 1 shows the measured cadmium concentration in the solution as a function of time, as well as the measured bed potential with the current on ($I_{on}$) and off ($I_{off}$).

TABLE I

| TIME (mins) | | 0 | 35 | 55 | 80 | 185 |
|---|---|---|---|---|---|---|
| Cd conc. (ppm) | | 314 | 136 | 54 | 26 | 2 |
| Bed Potential vs SCE (mV) | $I_{on}$ | 855 | 1035 | 1056 | 1056 | - |
| | $I_{off}$ | 790 | 805 | 1049 | 1047 | 998 |

Furthermore, the cadmium deposition current efficiency was calculated for the periods of current supply. This current efficiency during reduction from 314 to 26 ppm was 54.5 %. The efficiency was 77% from 314 to 136 ppm; 61% from 136 to 54 ppm and 17% from 54 to 26 ppm. This decreasing cadmium deposition current efficiency corresponds to increasing zinc deposits. The bed potential measurements show that after 35 mins. the particle surfaces were predominantly cadmium; after 55 and 80 mins. the particles had an appreciable surface layer of zinc. During the cementation step, the cadmium concentration was reduced from 26 ppm to 2 ppm without the consumption of further electrical energy, i.e. avoiding substantial current consumption in this relatively inefficient stage of the process, during which the cadmium deposition current efficiency would have been less than 5%. At the end of cementation, the current efficiency for depletion from 314 to 2 ppm was calculated to be 59%; this is excellent compared to the estimated overall current efficiency of about 20% for achieving the same final concentration of 2 ppm by continuing the electrolysis with unchanged operating conditions.

The bed potential at the end of cementation indicates that the particles still had a detectable amount of zinc at their surface; however, they obviously contain less zinc impurity than the particles at the end of the electrolytic growth.

## Example II

At the end of the cementation step of Example I, the cadmium particles with residual zinc on their surface were further purified as follows.

The zinc sulphate solution with progressively added amounts of cadmium was flowed for several minutes at the same rate, without current supply, and the bed potential was measured. This cementation operation lasted approximately 5 minutes and the results are shown in Table II.

TABLE II

| Cadmium concentration (ppm) | 2 | 50 | 100 | 200 |
|---|---|---|---|---|
| Bed potential $I_{off}$ (mV) | 999 | 930 | 874 | 800 |

These potential measurements show that substantially pure cadmium particles are obtained after a relatively short cementation in a solution with a higher cadmium concentration than the initial depleted electrolyte in which the particles had been grown.

## Example III

The cell as in Example I had a particulate cathode composed of copper particles and the catholyte was zinc sulphate solution containing 150 g/l of zinc (as metal) with 355 ppm Cd and 298 ppm Cu. The catholyte was circulated with a steady flow rate sufficient to maintain the bed with a substantially uniform circulation at pH 2.2 and an average temperature of 50°C. Current was supplied corresponding to a current density of 750 A/m$^2$ per geometrical area of the anode and was switched off when the copper concentration had dropped to 25 ppm. At this stage, the cadmium concentration was 230 ppm, illustrating that the electrogrown copper particles in the bed were contaminated with some cadmium. Circulation of the depleted zinc sulphate solution was then continued in the cell for 50 minutes to maintain the circulating bed without the supply of current. During this period, the cadmium in the particles underwent a cementation reaction with the copper in solution whereby the copper concentration in the solution dropped from 25 ppm to 11 ppm. Simultaneously, the cadmium concentration in the solution rose from 230 ppm to 275 ppm, illustrating that the particles in the bed had been partially purified by removal of some of the cadmium. The efficiency with which the cadmium cemented copper was calculated to be 56%.

## Example IV

The cell as in Example I was provided with a particulate cathode composed of copper particles of diameter 0.4 to 2 mm. Alternatively, cobalt particles could be used. A zinc sulphate catholyte containing 160 g/l of zinc (as metal) was circulated with a steady flow rate sufficient to maintain the bed with a substantially uniform circulation. Current was supplied corresponding to a current density of 500 A/m$^2$ per geometrical area of the anode, for a period of 30 minutes to 2 hours. The zinc-coated balls were then extracted from the cell and placed in a vessel containing the solution to be purified which consisted of zinc sulphate (160 g/l of zinc) containing 20 ppm of cobalt and 50 ppm copper. To this solution 10 ppm of antimony oxide was added as an activator. The cobalt concentration of this solution was measured and was found to drop from 20 ppm to $<$ 1 ppm after 20 minutes. With no Cu in the solution the cementation process was slower. It was thus possible to electrolytically remove cobalt from the solution by firstly electrodepositing zinc and then using the electrodeposited zinc to cement out the cobalt.

- 20 -

0028158

## CLAIMS

1. A method of purifying a solution containing ions of a first metal to be removed and at least one more electronegative metal by passing electric current through an electrochemical cell having a cathode such as a particulate bed cathode or a reticulate cathode in an electrolyte consisting of the solution to be purified or a solution of similar composition to preferentially deposit the first metal onto the cathode and thereby deplete the concentration of ions of the first metal in the electrolyte solution until a more electronegative metal also deposits onto the cathode, characterized by continuing the supply of electric current until the amount of the more electronegative metal electrodeposited on the cathode reaches a selected minimum value, and then, without supplying electric current, maintaining the cathodically-grown deposit in the solution to be purified to allow exchange of a quantity of the more electronegative metal contained in the deposit with a corresponding quantity of first metal in the solution by dissolution of the more electronegative metal and cementation of the first metal onto the deposit to reduce the concentration of ions of the first metal in the solution.

2. The method of claim 1, wherein cementation is carried out in the cell in which the deposit was cathodically grown.

3. The method of claim 1, wherein the cathodically-grown deposit is transferred from the electrochemical cell in which it was grown to a cementation unit.

4. The method of claim 1, 2 or 3, wherein during cementation the cathodically-grown deposit is maintained in the depleted electrolyte in which it was grown until the concentration of ions of the first metal in the electrolyte has been further depleted to a given value by cementation.

5. The method of claim 1, 2 or 3, wherein during cementation the cathodically-grown deposit is maintained in a solution to be purified which initially has a higher concentration of ions of the first metal than the depleted electrolyte at the end of electrochemical growth of the deposit.

6. The method of claim 5, wherein the solution purified by cementation is further purified by supplying it as the electrolyte solution to the electrochemical cell in which the deposit is grown.

7. The method of claim 1, 2 or 3, wherein during cementation the cathodically-grown deposit is maintained in a solution to be purified which initially has a lower concentration of ions of the first metal than the depleted electrolyte at the end of electrochemical growth of the deposit.

8. The method of claim 7, wherein the depleted electrolyte at the end of electrochemical growth of said deposit containing said more electronegative metal is purified by passing it through at least one further electrochemical cell, and is then supplied to said cathodically-grown deposit containing the more electronegative metal for further purification by cementation.

9. The method of any preceding claim, wherein at the end of cementation the cathodically-grown deposit consists of substantially pure first metal.

10. The method of any one of claims 1 to 8, wherein cementation is terminated when the concentration of ions of the first metal in the solution has dropped to a given level whereas the deposit still contains an appreciable amount of the more electronegative metal.

11. The method of claim 10, wherein after said cementation the deposit is used for further cementation in another solution.

12. The method of any preceding claim, wherein the solution to be purified is a zinc sulphate electrolyte containing traces of copper and/or cadmium.

13. The method of claim 12, wherein a first cementation is carried out with a cathodically-grown copper deposit containing cadmium and, after removal of the copper, a second cementation is carried out with a cathodically-grown cadmium deposit containing zinc.

14. The method of any preceding claim, wherein the electrochemical cell has a particulate bed cathode on which the deposit is grown.

15. A method of purifying electrogrown deposits of metal produced by passing electric current through an electrochemical cell having a cathode such as a particulate bed cathode or a reticulate cathode in an electrolyte solution containing ions of a first metal and at least one more electronegative metal to preferentially deposit the first metal onto the cathode and thereby deplete the concentration of ions of the first metal in the solution until a more electronegative metal also deposits onto the cathode, characterized by maintaining the cathodically-grown deposit in the depleted electrolyte solution or in a similar solution containing ions of the first metal without supplying electric current, to allow exchange of the more electronegative metal contained in the deposit with ions of the first metal in the solution by dissolution of the more electronegative metal and cementation of the first metal onto the deposit.

16. The method of claim 15, wherein electric current is supplied to grow the deposit until the amount of the more electronegative metal electrodeposited on the deposit reaches a selected value of contamination of the first metal in the deposit, and the cathodically-grown deposit is then maintained in the depleted electrolyte solution or in a similar solution containing ions of the first metal without supplying electric current until substantially all of the more electronegative metal contained in the deposit is exchanged with ions of the first metal in the solution by dissolution of the more negative metal and cementation of the first metal onto the deposit.

17.  The method of claim 16, wherein the deposit is purified in a single cementation step.

18.  The method of claim 16, wherein part of the more electronegative metal contained in the deposit is removed in a first cementation step, and the remainder of the more electronegative metal contained in the deposit is removed in a second cementation step.

19.  The method of any one of claims 15 to 18, wherein the deposit to be purified is copper containing cadmium, electrogrown from a zinc sulphate electrolyte containing traces of copper and cadmium.

20.  The method of any one of claims 15 to 18, wherein the deposit to be purified is cadmium containing zinc, electrogrown from a zinc sulphate electrolyte containing traces of cadmium.

21.  The method of any one of claims 15 to 20, wherein the electrochemical cell has a particulate cathode on which the deposit is grown.

22.  The method of any one of claims 15 to 21, wherein purification of the deposit is achieved with simultaneous purification of the solution according to the method of any one of claims 1 to 14.

23.  A method of removing a metal from solution by cementation with particles of a more electronegative metal, characterized by using electrogrown particles containing the more electronegative metal.

24.  The method of claim 23, wherein the electrogrown particles also contain the metal to be removed.

25.  The method of claim 24, wherein the particles have a core consisting predominantly of the metal to be removed and an electrodeposited surface layer containing the more electronegative metal.

26.  The method of claim 24 or 25, wherein the particles are grown as a particulate cathode in an electrolyte containing said metal to be removed and the more electronegative metal.

27.  The method of any one of claims 23 to 26, wherein during cementation the electrogrown particles are maintained in the solution as a circulating or fluidized bed.

28.  The method of any one of claims 23 to 27, wherein substantially all of the more electronegative metal contained in the electrogrown particles is dissolved by cementation and exchange with the metal removed from the solution.

29. A method of removing one or more metals from solution, characterized by electrodepositing at least one metal which is more electronegative than said metal(s) to be removed onto the cathode of an electrochemical cell, and further characterized by maintaining the electrodeposited metal in a non-cathodically-protected state in said solution to remove said metal(s) by cementation and dissolution of the more electronegative metal(s).

30. The method of claim 29, wherein the cathode is a particulate cathode.

31. The method of claim 29, wherein the cathode is a reticulate cathode.

32. The method of claim 29, 30 or 31, wherein said solution contains traces of cobalt and/or nickel to be removed and the more electronegative metal electrodeposited on the surface of the cathode is predominantly zinc.

33. A solution purified by the method of any one of claims 1 to 14 or 23 to 32.

34. A metal purified by the method of any one of claims 15 to 22, or claim 28.

35.  A system for carrying out the method of claim 3, comprising at least one electrochemical cell having a cathode chamber for receiving a particulate bed cathode in a stream of electrolyte to be purified and means for removing electrogrown particles from the cathode chamber, and at least one cementation unit having a cementation chamber for receiving a bed of electrogrown particles in a stream of solution to be purified, the or each cementation chamber being connected to the means for removing electrogrown particles from a cathode chamber to receive electrogrown particles therefrom.

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | C 01 G 9/06 <br> C 22 B 3/00 <br> C 25 C 1/00 |
| X | SU - A - 668 957 (E.I. ELICEIEFF) <br><br> * column 3, lines 16 to 24; column 4, lines 1 to 6 * <br><br> -- | 1,2,4, 12,14, 15,17, 19,29 | |
| A | GB - A - 1 348 787 (D.S. FLETT) | | |
| A | FR - A - 2 190 936 (STA. MINERARIA E METALLURGICA) | | |
| A | CHEMICAL ABSTRACTS, vol. 84, no. 22, May 31, 1976, page 477, abstract no. 157255u COLUMBUS, Ohio (US) & JP - A - 76 05 227 (MITSUI MINING AND SMELTING CO., LTD.) (Jan. 20, 1976) <br><br> ------- | | |

**TECHNICAL FIELDS SEARCHED (Int. Cl.³)**

C 01 G 9/06
C 22 B 3/00
         19/26
C 25 C 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |
| Place of search <br> The Hague | Date of completion of the search <br> 04-02-1981 | Examiner <br> GROSE ILLER |

EPO Form 1503.1  06.78

**BAD ORIGINAL**